# EUROPÄISCHE PATENTSCHRIFT

(11) **EP 2 493 678 B1**
(45) Veröffentlichungstag und Bekanntmachung des Hinweises auf die Patenterteilung: **30.03.2016**
(21) Anmeldenummer: 10795915.7
(22) Anmeldetag: 26.10.2010
(51) Int. Cl.: B29C 70/88, H01R 4/58, H05B 3/14, H05B 3/28

(54) **VORRICHTUNG ZUR ELEKTRISCHEN KONTAKTIERUNG ELEKTRISCH LEITFÄHIGER LAMINATE AUS KOHLEFASERVERSTÄRKTEN KUNSTSTOFFEN (CFK-LAMINATE)**
DEVICE FOR ELECTRICALLY CONTACTING ELECTRICALLY CONDUCTIVE LAMINATES MADE OF CARBON-FIBER-REINFORCED PLASTICS (CFRP LAMINATES)
DISPOSITIF POUR LA MISE EN CONTACT ÉLECTRIQUE DE STRATIFIÉS ÉLECTROCONDUCTEURS EN PLASTIQUES RENFORCÉS DE FIBRES DE CARBONE (STRATIFIÉS EN PRFC)

(30) Priorität: 26.10.2009 DE 102009051140
(43) Veröffentlichungstag der Anmeldung: 05.09.2012
(73) Patentinhaber: fibretemp GmbH & Co. KG, 28719 Bremen (DE)
(72) Erfinder: FUNKE, Herbert, 33378 Rheda-Wiedenbrück (DE); BRANDES, Jens, 28719 Bremen (DE)
(74) Vertreter: Schneider, Uwe
(86) Internationale Anmeldenummer: PCT/DE2010/001264
(87) Internationale Veröffentlichungsnummer: WO 2011/050787

(56) Entgegenhaltungen:
- WO-A1-2006/054853
- WO-A1-2006/077157
- US-A- 4 534 886
- US-A- 6 137 083

## Beschreibung

Die Erfindung betrifft eine Vorrichtung zur elektrischen Kontaktierung elektrisch leitfähiger Laminate aus kohlefaserverstärkten Kunststoffen (CFK-Laminate) gemäß Oberbegriff des Anspruches 1 sowie ein Verfahren zur elektrischen Kontaktierung elektrisch leitfähiger Laminate gemäß Oberbegriff des Anspruches 21.

Kohlefaserverstärkte Kunststoffe (CFK) bestehen aus elektrisch leitfähigen Kohlenstofffasern und zumeist nicht leitfähigen Kunststoffen. Es ist allgemein bekannt, dass entsprechende schichtweise Aufbauten, die auch als CFK-Laminate bezeichnet werden, elektrisch leitfähig sind. Allerdings ist ihre Leitfähigkeit im Vergleich zu metallischen Werkstoffen relativ schlecht. Bezogen auf den Querschnitt hat ein CFK-Laminat einen um den Faktor 1.000 bis über 5.000 mal höheren Widerstand als beispielsweise Kupfer. Die relativ schlechte elektrische Leitfähigkeit wird gezielt genutzt, um CFK-Oberflächen nach dem Prinzip eines Ohmschen Widerstandselementes elektrisch zu beheizen.

Die Vorteile einer CFK-Oberflächenheizung wurden bereits in der DE 10 2006 058 198 A1, der PCT/DE2007002219 und der DE 10 2005 003 371 A1 hinreichend beschrieben. Wie bereits in der DE 10 2005 003 371 A1 erkannt wurde, ist indes die Stromzuführung in entsprechende Laminate kritisch. Da entsprechende CFK-Heizungen zumeist bei geringen Kleinspannungen (Spannungen unter 42 Volt) und bei hohen Strömen bis zu mehreren 100 Ampere betrieben werden, führen Übergangswiderstände an den Kontaktierungsstellen zu überhöhter Erwärmung, was im Extremfall zu Zerstörung der CFK-Laminate im Kontaktierungsbereich führen kann. Die DE 10 2005 003 371 A1 löste dieses Problem, indem ausgehärtete CFK-Laminate schräg angeschnitten werden, um bei entsprechend vergrößerter Oberfläche mit einem elektrisch leitfähigen Kleber den Kontakt zwischen metallischer Stromzuführung und den zu kontaktierenden Kohlenstofffasern herstellte. Die DE 10 2006 058 198 A1 löste dieses Problem, indem die längs durch ein Bauteil über die gesamte Länge hindurch laufenden Kohlenstofffasern einzeln oder bündelweise mit metallischen Hülsen verquetscht und anschließend die Hülsen mit einer oder mehreren quer verlöteten Metallkabeln oder -bändern verlötet wurden. Die DE 10 2006 058 198 A1 konnte so gegenüber der in der DE 10 2005 003 371 A1 genannten Methode den Übergangswiderstand deutlich verringern, allerdings sind beide Methoden sehr aufwändig. Insbesondere das Verquetschen von Kohlenstofffasern mit metallischen Hülsen ist sehr aufwändig, wenn es in Handarbeit erfolgt. Da im Hauptanwendungsgebiet beheizbarer CFK-Laminate, der beheizbaren Werkzeugformen, von Anwendungsfall zu Anwendungsfall die Geometrien der Heizfelder unterschiedlich sind, erscheint hier eine automatisierbare Kontaktierung insbesondere dadurch schwer durchführbar zu sein, weil stets unterschiedliche Geometrien, insbesondere unterschiedliche Feldlängen kontaktiert werden müssen. Außerdem unterliegt eine manuell hergestellte Kontaktierung Qualitätsschwankungen, die in der unterschiedlichen Sorgfalt der Verarbeiter begründet sind. So zeigte sich, dass eine unterschiedlich starke Quetschung der Metallhülsen zu den Kohlenstofffasern zu erheblichen Schwankungen im Übergangswiderstand führen kann.

In Versuchen hat sich gezeigt, dass das einfache Ablegen von geflochtenen, gelochten oder anderweitig strukturierten Metallbändern zwar prinzipiell auch einen geringen Übergangswiderstand ergeben kann, wenn eine hinreichende Kontaktfläche zwischen den Metallbändern und den zu kontaktierenden Kohlenstofffasern besteht. Allerdings zeigte sich in thermischen Dauertests, dass bei häufigem Aufheizen und Wiederabkühlen aufgrund der unterschiedlichen thermischen Ausdehnungen von Metallen, Kohlenstofffasern und Kunstharzen Delaminationen zwischen Metallbändern und Kohlenstofffasern auftreten können, die den Übergangswiderstand zwischen Metallbändern und Kohlenstofffasern mit steigender Lastwechselzahl ansteigen lassen.

Aus der US-PS 4 534 886, der US-PS 6 137 083 und der WO 2006/054853 A1 sind Anordnungen von Heizschichten aus Kohlenstofffasern bekannt, bei denen ein Verweben der Kohlenstofffasern mit Zuführungsdrähten einer elektrischen Spannungsversorgung erfolgt. Dieses Verweben muss entweder schon bei der Herstellung der Heizschicht oder nach der Konfektionierung der Heizschicht aufwändig manuell erfolgen und ist daher unflexibel und kostenaufwändig.

Aufgabe der vorliegenden Erfindung ist es daher, eine Vorrichtung zur Kontaktierung zu entwickeln, mit der eine Kontaktierung zumindest zum Teil automatisierbar und somit kostengünstig und in gleich bleibender Qualität hergestellt werden kann.

Die Lösung der erfindungsgemäßen Aufgabe ergibt sich hinsichtlich der Vorrichtung aus den kennzeichnenden Merkmalen des Anspruches 1 und hinsichtlich des Verfahrens aus den kennzeichnenden Merkmalen des Anspruches 21 jeweils in Zusammenwirken mit den Merkmalen des zugehörigen Oberbegriffes. Weitere vorteilhafte Ausgestaltungen der Erfindung ergeben sich aus den Unteransprüchen.

Die Erfindung geht aus von einer Vorrichtung zur elektrischen Kontaktierung elektrisch leitfähiger Laminate aus kohlefaserverstärkten Kunststoffen (CFK-Laminate). Eine erfindungsgemäße Vorrichtung weist mindestens eine Lage eines Kohlenstofffasern aufweisenden Gewebes auf, wobei diese mindestens eine Lage einen ersten Bereich zur Kontaktierung mit an die Vorrichtung extern heran geführten elektrisch leitfähigen Elementen sowie einen zweiten Bereich aufweist, in dem die Vorrichtung auf die Kohlenstofffasern mindestens einer angrenzenden, elektrisch zu kontaktierenden Kohlenstofffaserlaminatschicht aufbringbar oder mit diesen Kohlenstofffasern verbindbar ist und der Oberflächenkontakt des zweiten Bereichs mit der mindestens einen zu kontaktierenden Kohlenstofffaserlaminatschicht in dem ersten Bereich der Vorrichtung eingeleitete elektrische Spannungen und Ströme mit geringem Kontaktwiderstand auf die Kohlenstofffasern der mindestens einen elektrisch zu kontaktierenden Kohlenstofffaserlaminatschicht überträgt.

Versuche mit elektrisch leitfähigen Kohlenstofffaserlaminatschichten haben gezeigt, dass die Kohlenstofffasern im Faser-Kunststoffverbund in Verbindung mit elektrisch nicht leitfähigen Kunstharzen fast ausschließlich in Faserrichtung leitfähig sind. Veranschaulicht wird das durch einen Versuch, bei dem ein biaxiales orthogonales Kohlenstofffasergewebe mit rechteckigem Zuschnitt in Längsrichtung an beiden schmalen Rechteckseiten nach der in der DE 10 2006 058 198 A1 beschriebenen Methode mit Quetschhülsen und quer verlöteter Kupferzuleitung kontaktiert wird. Als Gesamtwiderstand dieser Anordnung ergibt sich in etwa der Widerstand einer einzelnen Kohlenstofffaser entsprechender Länge geteilt durch die Anzahl der in Längsrichtung parallel geschalteten Kohlenstofffasern. Beim nachträglichen Entfernen der quer angeordneten Fasern ergibt sich eine nur geringfügige Widerstandserhöhung, was verdeutlicht, dass die Fasern hauptsächlich in Faserrichtung den Stromfluss leiten. Vor diesem Hintergrund erscheint es zunächst erstaunlich, dass ein weiteres, biaxiales Gewebestück mit gleicher Geometrie den Gesamtwiderstand im Vergleich zur ersten Lage halbiert, auch wenn es nicht unmittelbar kontaktiert, sondern nur mit leichtem Druck auf die erste Gewebelage aufgepresst wird. Dieses funktioniert, wie sich in Versuchen gezeigt hat sowohl mit trockenen Geweben, die mit geringem Druck aufeinander gepresst werden, wie auch mit Kohlenstofffaserlaminaten, die schichtweise aufgebaut und unter geringem Druck (z.B. im Vakuumsackverfahren) mit Kunstharz verpresst und ausgehärtet werden. Insbesondere funktioniert dieses auch bei einer nicht parallel zum Stromfluss verlaufenden Faserausrichtung. Erklärbar ist dieses durch den zwar quer zur Faserausrichtung relativ hohen Übergangswiderstand, der sich aber in flächigen Laminaten auf eine sehr große Oberfläche verteilt. Weitere Versuche haben gezeigt, dass bei Laminataufbauten mit leichten bis mittelschweren Geweben (Gewebeflächengewicht von 64 g/m² bis 400 g/m²) nach bereits wenigen cm Lauflänge (2-5 cm) der Stromfluss mit kaum erfassbarem Übergangswiderstand von einer Gewebelage in die nächste Gewebelage übertragen werden kann. Dieses funktioniert besonders gut bei biaxialen orthogonalen Gewebeaufbauten, wobei es nur geringfügige Unterschiede gibt, ob die Fasern längs und quer (0°/90°) zur Stromflussrichtung oder diagonal (±45°) zur Stromflussrichtung angeordnet sind.

Vorstehende Experimente und Überlegungen zeigen, dass es nicht zwingend erforderlich ist, bei einem elektrisch leitfähigen Kohlenstofffaserlaminat den Kontakt durch unmittelbare Kontaktierung der längs in Stromflussrichtung verlaufenden Kohlenstofffasern vorzunehmen.

Diese Effekte macht sich nunmehr die Erfindung in Form der erfindungsgemäßen Vorrichtung zunutze, indem die Kontaktierung durch einen relativ schmalen Kontaktstreifen (in bisherigen Untersuchungen hat sich eine Breite von ca. 5-19 cm bewährt) oder ein sogenanntes Kontaktband hergestellt wird, das in einer ersten Ausgestaltung mit elektrisch leitfähigen zusätzlichen Fasern z.B. aus Metall durchsetzt ist und von den Fasern etwa aus Metall im Oberflächenkontakt die elektrische Kontaktierung der zu bestromenden Kohlenstofffaserlaminate herstellt. In anderer Ausgestaltung ist es auch denkbar, zumindest einzelne der Kohlenstofffasern mit einer z.B. metallischen, elektrisch leitenden zusätzlichen Schicht zu überziehen und dadurch eine Anbindung an die extern heran geführten elektrisch leitenden Elemente herzustellen. Insbesondere muss dabei dafür Sorge getragen werden, dass ein dauerhafter Verbund zwischen den metallischen Elementen und den Kohlenstofffaserlaminatschichten erfolgt, die auch nach einer Vielzahl (tausende) von thermischen und/oder mechanischen Lastwechseln keine Tendenz zum Delaminieren zeigt. Hilfreich ist dabei evtl. auch ein zusätzliches Vernähen von metallischen Elementen und Kohlenstofffasern, ähnlich dem "Versteppen" das bei Gelegen üblich ist.

Die Trennung der Vorrichtung in zwei miteinander über die Kohlenstofffasern elektrisch in leitender Verbindung stehende Bereiche, wobei einer der Bereiche zur Übertragung der von den extern heran geführten elektrisch leitenden Elementen übertragenen Ströme und Spannungen auf die Kohlenstofffasern der Vorrichtung und der zweite Bereich zur Kontaktierung über den Flächenkontakt mit den Kohlenstofffasern der Kohlenstofffaserlaminatschicht dient, schafft damit zwei klar getrennte und damit einzeln optimal auslegbare Flächenabschnitte innerhalb der Vorrichtung für die jeweiligen Teilaufgaben.

Die vorliegende Erfindung beschreibt damit eine erfindungsgemäße Vorrichtung z.B. in Form eines relativ schmalen Kontaktbandes, mit dem die Stromzuführung (Kontaktierung) entsprechender Kohlenstofffaserlaminate effizient, kostengünstig und mit einem geringen Übergangswiderstand von metallischen Zuführungsleitungen in entsprechende CFK- Kohlenstofffaserlaminate vollzogen werden kann.

In einer ersten denkbaren Ausgestaltung kann die Lage des aus Kohlenstofffasern gebildeten Gewebes eine zumindest biaxiale Anordnung der Kohlenstofffasern aufweisen. Wie vorstehend beschrieben weisen derartige biaxiale Anordnungen, insbesondere auch bei Anordnung unter zueinander verdrehten Richtungen der Fasererstreckung besonders günstige Eigenschaften auf.

Laut die Erfindung ist das Gewebe in dem ersten Bereich aus Kohlenstofffasern und die Kohlenstofffasern zumindest abschnittsweise berührend kontaktierenden elektrisch leitfähigen Fäden, insbesondere metallischen Fäden gebildet. Derartige elektrisch leitfähige Fäden können ähnlich wie textile Fäden auf vielfältigste Weise in den Verbund mit den Kohlenstofffasern des ersten Bereichs gebracht werden, um den geforderten engen und elektrisch viele Kontaktstellen aufweisenden Verbund herzustellen. Hierbei können viele für normale textile Materialien bekannte Verfahren zum Einsatz kommen, die automatisiert und damit preisgünstig bei gleichwohl hoher Qualität den entsprechenden Verbund für den ersten Bereich erzeugen. Hierbei ist es denkbar, dass die Kohlenstofffasern und die elektrisch leitfähigen Fäden dauerhaft miteinander verbunden werden, vorzugsweise miteinander verwoben und/oder vernäht und/oder verwirkt und/oder versteppt und/oder textiltechnisch miteinander verschlungen oder verbunden werden.

So ist es in einer besonders vorteilhaften Ausgestaltung denkbar, dass die Kohlenstofffasern der Vorrichtung zumindest im ersten Bereich eine gewebte Anordnung von aus Kohlenstofffasern gebildeten Längsfäden in Kettrichtung und aus Kohlenstofffasern gebildeten Querfäden in Schussrichtung bilden, wobei die elektrisch leitfähigen Fäden den ersten Bereich in Längsrichtung parallel zur Kettrichtung der aus Kohlenstofffasern gebildeten Längsfäden durchziehen. Hierdurch bilden insbesondere die elektrisch leitfähigen Fäden eine besonders hohe Anzahl von Fadenkreuzungen mit den Kohlenstofffasern des ersten Bereichs, wodurch eine Vielzahl von Kontaktflächen zwischen den elektrisch leitfähigen Fäden und den Kohlenstofffasern entstehen und der Übergangswiderstand zwischen den elektrisch leitfähigen Fäden und den Kohlenstofffasern stark minimiert wird. Selbstverständlich sind eine Vielzahl andere als die vorstehend beschriebene Gestaltung von elektrisch leitfähigen Fäden und Kohlenstofffasern denkbar, wobei insbesondere die Herstellung auf textiltechnisch üblichen Maschinen und damit eine kostengünstige Herstellung im Vordergrund steht.

Weiterhin kann es von Vorteil sein, wenn die Kohlenstofffasern und/oder die elektrisch leitfähigen Fasern eine Faserwelligkeit aufweisen, die die Steifigkeit der Vorrichtung in dem ersten Bereich reduziert. Durch eine solche auch bei Geweben üblich Faserondulation (Faserwelligkeit) können die Steifigkeit des Laminatverbundes abgemindert und dadurch bei thermischen und mechanischen Dehnungen die interlaminaren Spannungen reduziert werden.

Eine andere Ausgestaltung ist ebenfalls denkbar, bei der das Gewebe in dem ersten Bereich aus Kohlenstofffasern mit elektrisch leitfähiger, insbesondere metallischer Beschichtung gebildet ist. Hierbei werden die Kohlenstofffasern Fasern in dem ersten Bereich zumindest teilweise mit einer elektrisch leitenden Schicht überzogen, z.B. vernickelt oder auf andere Weise metallisch beschichtet. Dadurch bilden sich zwischen den beschichteten Fasern und den unbeschichteten Fasern wiederum die schon vorstehend für die alternative Ausführungsform mit metallischen Fäden beschriebene, vielfach kontaktierende Verbindung, wobei die beschichteten und die unbeschichteten Kohlenstofffasern ebenfalls wieder wie schon beschrieben mit Hilfe textiler Herstellverfahren in eine zweckentsprechende Anordnung gebracht werden können. Zudem ist es möglich, eine formschlüssige metallische Verbindung zu metallischen Zuleitungen (z. B. durch Verlöten oder Schweißen) herzustellen.

Hinsichtlich der für die Herstellung der elektrisch leitfähigen Fäden nutzbaren Materialien ist es denkbar, dass die elektrisch leitfähigen Fäden zumindest teilweise aus Kupfer und/oder einer Kupferlegierung und/oder aus Edelstahl und/oder aus Titan gebildet sind. Hierbei ist es generell von Vorteil, wenn die elektrisch leitfähigen Fäden oder die entsprechende Beschichtung der Kohlenstofffasern im ersten Bereich der Vorrichtung aus einem Metall oder einer Metalllegierung bestehen, die in der elektrischen Spannungsreihe den Eigenschaften der Kohlenstofffaser nahe stehen. Vorzugsweise werden Metalle verwendet, die in der Spannungsreihe nahe an den technischen Werten Kohlenstofffasern liegen, um elektrochemische Korrosion zu verhindern ( Edelstahl, Titan). Allerdings hat sich der Einsatz von Kupfer hier als besonders geeignet erwiesen.

Weiterhin ist es von Vorteil, wenn die Kohlenstofffasern der Vorrichtung in dem zweiten Bereich mit den Kohlenstofffasern der elektrisch zu kontaktierenden Kohlenstofffaserlaminatschichten, einander elektrisch vielfach kontaktierend, aneinander laminiert sind. Hierdurch bildet sich ein fester und trotzdem elektrisch leitfähiger Verbund zwischen den Kohlenstofffasern der Vorrichtung in dem zweiten Bereich und den Kohlenstofffasern der elektrisch zu kontaktierenden Kohlenstofffaserlaminatschichten, der sich auch bei vielen thermischen Lastzyklen nicht verändert und eine dauerhafte Verankerung aller stromzuleitenden Elemente zueinander und zum Kohlenstofffaserlaminat ohne Delaminationsneigung sowie einen geringen Übergangswiderstand gewährleistet.

Weiterhin ist denkbar, dass die Abmessungen der Vorrichtung und/oder die Verteilung der elektrisch leitfähigen Fäden in dem ersten Bereich derart ausgelegt sind, dass die elektrisch leitfähigen Fäden im ersten Bereich der Vorrichtung nicht mehr als 4-5 Ampere pro Quadratmillimeter Leitungsquerschnitt führen müssen. Hierbei ist auch zu berücksichtigen, dass bei breiten Heizfeldern, bei denen die Stromzuführung nur von den Seiten aus erfolgen soll, die Vorrichtung über einen hinreichend geringen Querschnitt verfügen muss. Hier haben Experimente gezeigt, dass z.B. Kupferzuleitungen angemessen dimensioniert sind, wenn diese im Kontaktstreifen integriert nicht mehr als 4-5 Ampere pro Quadratmillimeter Kupferleitungsquerschnitt führen müssen.

In weiterer Ausgestaltung ist es denkbar, dass die Vorrichtung ein längserstrecktes Kontaktband aufweist, das am Rand oder auf Abschnitten der elektrisch zu kontaktierenden Kohlenstofffaserlaminatschichten angeordnet werden kann. Ein solches Kontaktband, das etwa als Endlosband, vorzugsweise oder auch abschnittsweise in vorkonfektionierten Längen herstellbar ist, dient quasi als Halbzeug zur genormten und einfach herzustellenden Verbindung von Kohlenstofffaserlaminatschichten mit extern heran geführten elektrischen Kontaktelementen. In weiterer Ausgestaltung kann ein solches Kontaktband mit den elektrisch leitfähigen Fäden oder den elektrisch leitfähig beschichteten Kohlenstofffasern verlötete und/oder verkrimpte und/oder verquetschte und/oder auf andere Weise form- und/oder stoffschlüssig mit dem Kontaktband verbundene elektrisch leitfähige Elemente aufweisen, über die die Zuführung des Stroms von außen in das Kontaktband erfolgt. Z.B. kann an diesen derart an dem Kontaktband angeordneten elektrisch leitfähigen Elemente über Schraub- oder Klemmverbindungen eine externe Drahtzuleitung angebracht werden. Dabei können die elektrisch leitfähigen Elemente in regelmäßigen Abständen oder anpassbar an ein gewünschtes Kontaktierungsverhalten an dem Kontaktband angeordnet sein, je nachdem, welche Kontaktierungsverhalten gewünscht wird. Die Besonderheit liegt darin, dass zur elektrischen Kontaktierung elektrisch leitfähiger Kohlenstofffaserlaminate die Verbindung von der metallischen Zuleitung zu den elektrisch leitfähigen Kohlenstofffasern über Kontaktbänder erfolgt, die als Halbzeug vorgefertigt und somit bei automatisierter oder teilautomatisierter Herstellung kostengünstig bereitgestellt werden können. Das Halbzeug könnte in vorkonfektionierten Längen oder auch als Endlosband geliefert und vom Hersteller von elektrisch leitfähigen Kohlenstofffaserlaminate nach individuellen Erfordernissen zugeschnitten und abgelegt werden.

Die Erfindung betrifft weiterhin ein erfindungsgemäßes Verfahren zur elektrischen Kontaktierung elektrisch leitfähiger Laminate aus kohlefaserverstärkten Kunststoffen (CFK-Laminate), insbesondere ein Verfahren unter Nutzung der Vorrichtung gemäß Anspruch 1, bei dem Ströme oder Spannungen über mindestens eine Lage eines Kohlenstofffasern aufweisenden Gewebes in die mindestens eine zu kontaktierende Kohlenstofffaserlaminatschicht eingeleitet werden, wobei die Einleitung in die Kohlenstofffaserlaminatschicht in einem ersten Bereich mit zusätzlichen, die Kohlenstofffasern elektrisch kontaktierenden, elektrisch leitfähigen Fäden oder einer zusätzlich elektrisch leitfähigen Beschichtung der Kohlenstofffasern erfolgt, und sich diese Kohlenstofffasern bis in einen zweiten Bereich erstrecken, in dem die Kohlenstofffasern auf mindestens eine angrenzende, elektrisch zu kontaktierende Kohlenstofffaserlaminatschicht aufgebracht oder mit dieser Kohlenstofffaserlaminatschicht verbunden sind und der Oberflächenkontakt des zweiten Bereichs mit der mindestens einen zu kontaktierenden Kohlenstofffaserlaminatschicht die in dem ersten Bereich eingeleiteten elektrischen Spannungen und Ströme mit geringem Kontaktwiderstand auf die Kohlenstofffasern der mindestens einen elektrisch zu kontaktierenden Kohlenstofffaserlaminatschicht überträgt. Bei dem erfindungsgemäßen Verfahren werden Ströme und Spannungen, die von extern an die Kohlenstofffaserlaminatschicht herangeführt werden, zuerst über einen zusätzliche elektrisch leitfähige Bestandteile aufweisenden ersten Bereich in dort vorhandene Kohlenstofffasern eingekoppelt und von diesen in einen zweiten Bereich weiter geleitet, in dem diese Fasern auf den Kohlenstofffasern der Kohlenstofffaserlaminatschicht aufliegen oder mit diesen verbunden werden. Damit kann eine gute Übertragung bei geringen Übergangswiderständen erzielt werden. Dabei erfolgt die Stromeinleitung vom Kontaktstreifen in die Kohlenstofffaserlaminatschichten über den Oberflächenkontakt der Kohlenstofffasern des Kontaktbandes zu einzelnen oder mehreren Laminatschichten des Kohlenstofffaserlaminates. Im Gegensatz zum Stand der Technik ist es somit nicht erforderlich, den elektrischen Kontakt von einer metallischen Zuleitung direkt in die einzelnen Kohlenstofffaserlaminatschichten vorzunehmen.

Weitere Eigenschaften und Vorteile der Erfindung lassen sich aus folgenden Beispielen und Erläuterungen entnehmen:

Insbesondere hat sich eine Anordnung der Fasern der Vorrichtung mit einem gewebten Aufbau mit Fäden in Längsrichtung (Kette) und Querrichtung (Schuss) bewährt. Dieses gewebte Kohlenstofffaserband ist in Längsrichtung mit vielen dünnen elektrisch leitenden bzw. metallischen Fäden, z.B. Kupferfäden durchzogen. Diese Kupferfäden sollten mit möglichst vielen Fadenkreuzungen versehen sein, damit sie eine möglichst große Kontaktfläche zu den Kohlenstofffasern aufweisen und durch die Verwebung zwischen den Kohlenstofffasern verankert sind. Denkbar ist statt einer Gewebeausführung auch eine Ausführung als Gelege, wobei die unterschiedlichen Fäden räumlich mit einander vernäht bzw. versteppt sind. Denkbar ist es auch, dass die Kupferfäden gewirkt und nicht gewebt werden. Durch das Wirken verbessert sich die Möglichkeit, ausreichend viele Kupferfäden auf eine geringe Breite im Kontaktband einzubringen. Beim Weben ist die Anzahl der Schussfäden hingegen technisch begrenzt. Man würde möglicherweise nicht genug Kupfer auf eine vertretbare Breite innerhalb des Kontaktbandes unterbekommen, um sinnvolle Leiterquerschnitte zu erzielen.

Je dünner die einzelnen Kupferfäden sind, desto größer ist bei gleich bleibendem Gesamtkupferquerschnitt die Kontaktfläche zu den Kohlenstofffasern der Vorrichtung, was insgesamt den Kontaktwiderstand zwischen Kupfer und Kohlenstofffasern reduziert. Die Verschlingung (das "eingewebt sein") der Kupferfäden in das Kohlenstofffasergewebeband gewährleistet eine mechanische Verankerung der Kupferfäden im Kohlenstofffasergewebeband. Dieses verringert die Delaminationsgefahr zwischen dem Kupfer und den Kohlenstofffasern.

Selbstverständlich können bei Verwendung mehrerer zu kontaktierenden Lagen aus Kohlenstofffasern in dem Kohlenstofffaserlaminat für die Beheizung auch mehr als ein Kontaktband abgelegt werden, um eine homogenere Einleitung des Stroms in alle an der Heizung beteiligten Lagen zu realisieren. Durch diese Maßnahme kann zusätzlich der Gesamtkupferquerschnitt der geplanten Heizleistung angepasst werden. Auch wäre ein Kontaktierungsband mit unterschiedlichen Kupfer-Querschnitten denkbar.

Es sei nur der Vollständigkeit halber darauf hingewiesen, dass die Bezeichnung Kupfer in vorstehenden Absätzen selbstverständlich auch durch andere, elektrisch leitfähige Materialien ersetzt werden kann.

In beispielhaft aufgeführten experimentellen Untersuchungen wurden elektrisch leitfähige Platten als CFK-Heizplatten mit folgenden Spezifikationen hergestellt:

Typische Plattenabmessungen (ohne Randzone) sind: Länge Lₜₕₑₒᵣ. = 1 m, Breite B = 0,4 m. Mit Randzone betrug die Plattenlänge insgesamt 1,20 m.

Es wurden Kohlenstofffasergewebe mit einem Flächengewicht von 400 g/m² verwendet. Das Gewebe hat sowohl in Kett- wie in Schussrichtung 2,5 Fäden pro cm. Somit liegen auf der Breite von 0,4 m 100 einzelne Fäden mit je 1 m Länge parallel.

Ein einzelner Faden des genannten Gewebes hat einen elektrischen Widerstand von 35 Ohm. Damit ergibt sich der Widerstand eines entsprechenden Rechteckstückes in Längsrichtung gemessen zu 0,350 Ohm.

Ein weiteres Gewebestück mit diagonalem Faserverlauf unter Druck darauf gepresst reduziert den Gesamtwiderstand des zweilagigen Laminates auf 0,175 Ohm.

Um im Randbereich Platz für einen Kontaktstreifen hinzuzugewinnen wurde die Länge der Platten um 10 cm zu beiden Seiten und somit auf L_{ges} = 1,20 m verlängert.

Es wurden also zwei Gewebelagen mit 1,20 m Länge und 0,40 m Breite zugeschnitten und aufeinander gelegt. Die Faserorientierung einer Lage betrug 0°/90°, die der zweiten Lage ±45°. An beiden Enden wurde ein 10 cm breiter Kontaktstreifen wie folgt ausgebildet:

Zusätzlich zu den beiden erstgenannten durchgehenden Lagen wurden zwei weitere Gewebelagen mit 10 cm Länge und 40 cm Breite abgelegt. Darauf folgte ein Kontaktband, das eine Breite von insgesamt 10 cm hat, wovon ein 4 cm breiter Streifen mit feinen Kupferfäden längs durchzogen sind. Insgesamt weisen diese Kupferfäden einen Gesamtquerschnitt von 20 mm² auf.

Die Randzone wurde anschließend noch mit zwei weiteren Gewebelagen des 400 g/m² schweren Kohlenstofffasergewebes abgedeckt. Alles wurde in einem Arbeitsgang im Infusionsverfahren mit Epoxidharz getränkt.

Die Stromzuführung erfolgte bei der genannten Versuchsplatte jeweils an zwei Außenseiten jedes Kontaktbandes. Dazu wurden am äußeren Rand Kupferklötze an die Kupferfäden gelötet. Die Kupferklötze wurden nach dem Beschnitt mit Gewindebohrungen versehen, um Zuleitungskabel anzuschrauben.

In einer anderen Versuchsausführung wurden die Kupferkabel am Ende mit großen Kabelschuhen verquetscht. Die Kabelschuhe wurden mit einlaminiert und nach dem Aushärten des Laminates zum Anschluss weiterer Anschlusskabel freigelegt.

Es zeigte sich in ersten Versuchen, dass der Anschlusswiderstand bei obiger Ausführung so gering ist, dass die ca. 10 cm breite Kontaktzone bei einem Stromfluss von insgesamt 60 Ampere kaum erwärmt, wohingegen die Heizzone (Plattenlänge Lₜₕₑₒᵣ. = 1 m) sich wie gewünscht stark erwärmt. Durch die zusätzlichen Gewebelagen in der Kontaktzone wird der Gesamtquerschnitt dort deutlich aufgedickt und somit der lokale Widerstand in diesem Bereich reduziert. Insgesamt hatte die Platte einen elektrischen Widerstand inklusive Zuleitungskabel und Kabelanschlüsse von ca. 0,198 Ohm.

Im Dauerversuchen zeigte sich, dass nach 1.000 Lastzyklen mit einer Aufheizung der Platten von Raumtemperatur auf 120°C innerhalb von 5 Minuten, einer Haltezeit bei 120°C von 10 Minuten und anschließender Abkühlung keine messbare Änderung des Plattenwiderstandes feststellbar war. Delaminationen waren ebenfalls nicht erkennbar. Bei der Aufheizung der Platte auf 120°C blieben die Randzonen mit Temperaturen von ca. 50°C über den gesamten Versuchszeitraum relativ kühl.

Diese Dauerversuche zeigen, dass eine Kontaktierung entsprechender CFK-Elemente insbesondere als Kontaktelemente für CFK-Heizfelder mit einem entsprechenden Kontaktband möglich ist.

Ganz allgemein ist mit der erfindungsgemäßen Vorrichtung bzw. nach dem erfindungsgemäßen Verfahren eine zuverlässige elektrische Kontaktierung von CFK-Laminaten mit entsprechenden Kontaktbändern und einem darauf abgestimmten Laminataufbau möglich. Neben den bereits erwähnten CFK-Heizungen können auch Kontaktierungen für elektrotechnische Anwendungen (Antennen, abschirmende CFK-Hüllen, Blitzableiter, Erdungen, etc) auf diese Weise vorgenommen werden.

Konkrete Anwendungen werden zunächst bei den elektrisch beheizbaren CFK-Heizformen angestrebt. Dort können die bisherigen Kontaktierungen durch ein entsprechendes Kontaktierungsband, welches als Halbzeug automatisiert hergestellt und als Rollenware geliefert werden kann, wesentlich vereinfacht und insbesondere hinsichtlich der Zuverlässigkeit verbessert werden.

Insbesondere ist es auch möglich, mit einem entsprechenden Kontaktband längere Heizfelder in Längsrichtung zu unterteilen und Mittenkontakte anzuordnen und so einzelne Heizfelder hintereinander zu schalten, ggf. auch einzeln anzusteuern und zu regeln. Durch "Überkreuz-Verschaltungen" und angepassten Kupferquerschnitten in den Kontaktierungsbändern ist es möglich, den Effekt der kühleren Kontaktierungsstellen dahin gehend zu beeinflussen, dass eine homogene Temperatur über die gesamte Formenoberfläche erzielt wird.

## Patentansprüche

1. Vorrichtung zur elektrischen Kontaktierung elektrisch leitfähiger Laminate aus kohlefaserverstärkten Kunststoffen (CFK-Laminate), wobei die Vorrichtung mindestens eine Lage eines Kohlenstofffasern aufweisenden Gewebes aufweist,
**dadurch gekennzeichnet, dass**
diese mindestens eine Lage einen ersten Bereich zur Kontaktierung mit an die Vorrichtung extern heran geführten elektrisch leitfähigen Elementen sowie einen zweiten Bereich aufweist, in dem die Vorrichtung auf die Kohlenstofffasern mindestens einer angrenzenden, elektrisch zu kontaktierenden Kohlenstofffaserlaminatschicht aufbringbar oder mit diesen Kohlenstofffasern verbindbar ist,
der Oberflächenkontakt des zweiten Bereichs mit der mindestens einen zu kontaktierenden Kohlenstofffaserlaminatschicht in dem ersten Bereich der Vorrichtung eingeleitete elektrische Spannungen und Ströme mit geringem Kontaktwiderstand auf die Kohlenstofffasern der mindestens einen elektrisch zu kontaktierenden Kohlenstofffaserlaminatschicht überträgt,
das Gewebe in dem ersten Bereich aus Kohlenstofffasern und die Kohlenstofffasern zumindest abschnittsweise berührend kontaktierenden elektrisch leitfähigen Fäden gebildet ist und die Kohlenstofffasern und die elektrisch leitfähigen Fäden eine Vielzahl von Fadenkreuzungen bildend dauerhaft miteinander verbunden sind.

2. Vorrichtung gemäß Anspruch 1, **dadurch gekennzeichnet, dass** die Lage des aus Kohlenstofffasern gebildeten Gewebes eine zumindest biaxiale Anordnung der Kohlenstofffasern aufweist.

3. Vorrichtung gemäß einem der Ansprüche 1 oder 2, **dadurch gekennzeichnet, dass** die elektrisch leitfähigen Fäden aus metallischen Fäden gebildet sind.

4. Vorrichtung gemäß einem der Ansprüche 1 bis 3, **dadurch gekennzeichnet, dass** die Kohlenstofffasern und die elektrisch leitfähigen Fäden miteinander verwoben und/oder vernäht und/oder verwirkt und/oder versteppt und/oder textiltechnisch miteinander verschlungen oder verbunden sind.

5. Vorrichtung gemäß einem der vorstehenden Ansprüche, **dadurch gekennzeichnet, dass** die Kohlenstofffasern der Vorrichtung zumindest im ersten Bereich eine gewebte Anordnung von aus Kohlenstofffasern gebildeten Längsfäden in Kettrichtung und aus Kohlenstofffasern gebildeten Querfäden in Schussrichtung bilden, wobei die elektrisch leitfähigen Fäden den ersten Bereich in Längsrichtung parallel zur Kettrichtung der aus Kohlenstofffasern gebildeten Längsfäden durchziehen.

6. Vorrichtung gemäß einem der vorstehenden Ansprüche, **dadurch gekennzeichnet, dass** die hohe Anzahl von Fadenkreuzungen der elektrisch leitfähigen Fäden mit den Kohlenstofffasern des ersten Bereichs eine Vielzahl von Kontaktflächen zwischen den elektrisch leitfähigen Fäden und den Kohlenstofffasern bewirken.

7. Vorrichtung gemäß einem der vorstehenden Ansprüche, **dadurch gekennzeichnet, dass** die Kohlenstofffasern und/oder die elektrisch leitfähigen Fasern eine Faserwelligkeit aufweisen, die die Steifigkeit der Vorrichtung in dem ersten Bereich reduziert.

8. Vorrichtung gemäß einem der Ansprüche 1 oder 2, **dadurch gekennzeichnet, dass** das Gewebe in dem ersten Bereich aus Kohlenstofffasern mit elektrisch leitfähiger, insbesondere metallischer Beschichtung gebildet ist.

9. Vorrichtung gemäß einem der vorstehenden Ansprüche, **dadurch gekennzeichnet, dass** die elektrisch leitfähigen Fäden oder die mit elektrisch leitfähiger, insbesondere metallischer Beschichtung gebildeten Kohlenstofffasern elektrisch mit den extern heran geführten elektrisch leitfähigen Elementen verbindbar, insbesondere dauerhaft an diesen elektrisch leitfähigen Elementen festlegbar sind.

10. Vorrichtung gemäß einem der vorstehenden Ansprüche, **dadurch gekennzeichnet, dass** die elektrisch leitfähigen Fäden zumindest teilweise aus Kupfer und/oder einer Kupferlegierung und/oder aus Edelstahl und/oder aus Titan gebildet sind.

11. Vorrichtung gemäß einem der vorstehenden Ansprüche, **dadurch gekennzeichnet, dass** die elektrisch leitfähigen Fäden oder die entsprechende Beschichtung der Kohlenstofffasern im ersten Bereich der Vorrichtung aus einem Metall oder einer Metalllegierung bestehen, die in der elektrischen Spannungsreihe den Eigenschaften der Kohlenstofffaser nahe stehen.

12. Vorrichtung gemäß einem der vorstehenden Ansprüche, **dadurch gekennzeichnet, dass** die Kohlenstofffasern der Vorrichtung in dem zweiten Bereich mit den Kohlenstofffasern der elektrisch zu kontaktierenden Kohlenstofffaserlaminatschichten, einander elektrisch vielfach kontaktierend, aneinander laminiert sind.

13. Vorrichtung gemäß einem der vorstehenden Ansprüche, **dadurch gekennzeichnet, dass** die Abmessungen der Vorrichtung und/oder die Verteilung der elektrisch leitfähigen Fäden in dem ersten Bereich derart ausgelegt sind, dass die elektrisch leitfähigen Fäden im ersten Bereich der Vorrichtung nicht mehr als 4-5 Ampere pro Quadratmillimeter Leitungsquerschnitt führen müssen.

14. Vorrichtung gemäß einem der vorstehenden Ansprüche, **dadurch gekennzeichnet, dass** mehr als eine Vorrichtung zur Kontaktierung unterschiedlicher elektrisch zu kontaktierender Kohlefaserlaminatschichten vorsehbar sind.

15. Vorrichtung gemäß einem der vorstehenden Ansprüche, **dadurch gekennzeichnet, dass** die Vorrichtung ein längserstrecktes Kontaktband aufweist, das am Rand oder auf Abschnitten der elektrisch zu kontaktierenden Kohlenstofffaserlaminatschichten anordenbar ist.

16. Vorrichtung gemäß Anspruch 15, **dadurch gekennzeichnet, dass** das Kontakt-band als Endlosband, vorzugsweise als Rollenware herstellbar ist.

17. Vorrichtung gemäß Anspruch 15, **dadurch gekennzeichnet, dass** das Kontaktband abschnittsweise in vorkonfektionierten Längen herstellbar ist.

18. Vorrichtung gemäß einem der Ansprüche 15 bis 17, **dadurch gekennzeichnet, dass** das Kontaktband mit den elektrisch leitfähigen Fäden oder den elektrisch leitfähig beschichteten Kohlenstofffasern verlötete und/oder verkrimpte und/oder verquetschte und/oder auf andere Weise form- und/oder stoffschlüssig mit dem Kontaktband verbundene elektrisch leitfähige Elemente aufweist, über die die Zuführung des Stroms von außen in das Kontaktband erfolgt.

19. Vorrichtung gemäß Anspruch 18, **dadurch gekennzeichnet, dass** die elektrisch leitfähigen Elemente in regelmäßigen Abständen oder anpassbar an ein gewünschtes Kontaktierungsverhalten an dem Kontaktband angeordnet sind.

20. Vorrichtung gemäß einem der vorstehenden Ansprüche, **dadurch gekennzeichnet, dass** das Kontaktband eine Breite von 5 bis 20 cm aufweist.

21. Verfahren zur elektrischen Kontaktierung elektrisch leitfähiger Laminate aus kohlefaserverstärkten Kunststoffen (CFK-Laminate), insbesondere ein Verfahren unter Nutzung der Vorrichtung gemäß Anspruch 1,
**dadurch gekennzeichnet, dass**
Ströme oder Spannungen über mindestens eine Lage eines Kohlenstofffasern aufweisenden Gewebes in die mindestens eine zu kontaktierende Kohlenstofffaserlaminatschicht eingeleitet werden, wobei die Einleitung in die Kohlenstofffaserlaminatschicht in einem ersten Bereich mit zusätzlichen, die Kohlenstofffasern elektrisch kontaktierenden, elektrisch leitfähigen Fäden oder einer zusätzlich elektrisch leitfähigen Beschichtung der Kohlenstofffasern erfolgt, und sich diese Kohlenstofffasern bis in einen zweiten Bereich erstrecken, in dem die Kohlenstofffasern auf mindestens eine angrenzende, elektrisch zu kontaktierende Kohlenstofffaserlaminatschicht aufgebracht oder mit dieser Kohlenstofffaserlaminatschicht verbunden sind und der Oberflächenkontakt des zweiten Bereichs mit der mindestens einen zu kontaktierenden Kohlenstofffaserlaminatschicht die in dem ersten Bereich eingeleiteten elektrischen Spannungen und Ströme mit geringem Kontaktwiderstand auf die Kohlenstofffasern der mindestens einen elektrisch zu kontaktierenden Kohlenstofffaserlaminatschicht überträgt.

22. Verwendung einer erfindungsgemäßen Vorrichtung gemäß einem der Ansprüche 1 bis 20 zur Kontaktierung von Heizschichten elektrisch beheizbarer CFK-Heizformen oder CFK-Flächenheizungen.

## Claims

1. A device for electrically contacting electrically conductive laminates made of carbon-fiber-reinforced plastics (CFRP laminates), the device comprising at least one layer of a fabric comprising carbon fibers,
**characterized in that**
- said at least one layer comprising a first region for contacting to electrically conductive elements externally brought up to the device and a second region, in which the device can be applied to the carbon fibres of at least one adjacent carbon fiber laminate layer, which has electrically to be contacted, or can be connected with these carbon fibres,
- the surface contact of this second region with the at least one carbon fiber laminate layer to be contacted transmits electrical voltages and currents lead in the first region of the device with low contact resistance to the carbon fibers of the at least one carbon fiber laminate layer which has electrically to be contacted,
- the fabric in the first region is formed of carbon fibers and threads which at least partially touch and contact the electrical conductive carbon fibers and the carbon fibres and the electrically conductive threads are integrally and permanently connected forming a plurality of thread intersections.

2. The device according to claim 1, **characterized in that** the layer of the fabric formed by carbon fibers shows an at least biaxial arrangement of the carbon fibers.

3. The device according to any one of claims 1 or 2, **characterized in that** the electrically conductive threads are made of metal threads.

4. The device according to any one of claims 1 to 3, **characterized in that** the carbon fibers and the electrically conductive threads are woven together and/or sewed up and/or' knitted together and/or stitched and/or textile-technical intertwined with each other or connected in accordance.

5. The device according to one of the preceding claims, **characterized in that** the carbon fibers of the device form at least in the first region a woven arrangement formed from carbon fibers as longintudinal threads in the warp direction and transverse threads formed by carbon fibers in the weft direction, said electrically conductive threads run through the first region in the longitudinal direction parallel to the warp direction of the longitudinal threads formed of carbon fibers.

6. The device according to one of the preceding claims, **characterized in that** the high number of fibre crossings of the electrically conductive fibers with the carbon fibers of the first region cause a plurality of contact surfaces between the electrically conductive threads and the carbon fibers.

7. The device according to one of the preceding claims, **characterized in that** the carbon fibers and/or the electrically conductive fibers have a fiber waviness which reduces the rigidity of the device in the first region.

8. The device according to one of claims 1 or 2, **characterized in that** the fabric in the first region is formed of carbon fibers with an electrically conductive, in particular metallic coating.

9. The device according to one of the preceding claims, **characterized in that** the electrically conductive threads or the carbon fibers formed with electrically conductive, particularly metallic coating are electrically connectable with electrically conductive elements brought near from external, especially permanently fixable to these electrically conductive elements.

10. The device according to one of the preceding claims, **characterized in that** the electrically conductive threads are made at least partially of copper and/or a copper alloy and/or stainless steel and/or titanium.

11. The device according to one of the preceding claims, **characterized in that** the electrically conductive threads or the corresponding coating of the carbon fibers in the first region of the device are made of a metal or a metal alloy which are close to the properties of the carbon fiber in the electricalchemical series.

12. The device according to one of the preceding claims, **characterized in that** the carbon fibers of the device in the second region are laminated together with the carbon fibers of the carbon fiber laminate layers electrically to be contacted, each electrically frequently contacting.

13. The device according to one of the preceding claims, **characterized in that** the dimensions of the device and/or the distribution of the electrically conductive threads in the first region are designed in a way that the electrically conductive threads in the first region of the device must lead not more than 4-5 amperes per square millimeter cable cross-section.

14. The device according to one of the preceding claims, **characterized in that** more than one device is provided for contacting different carbon fiber laminate layers which have electrically to be contacted.

15. The device according to one of the preceding claims, **characterized in that** the device comprises a longitudinally extending contact tape which can be arranged on the edge or on portions of the carbon fiber laminate layers to be electrically contacted.

16. The device according to claim 15, **characterized in that** the contact tape can be produced as an endless tape, preferably as a roll goods.

17. The device according to claim 15, **characterized in that** the contact tape is manufactured in parts in prefabricated lengths.

18. The device according to one of claims 15 to 17, **characterized in that** the contact tape with the electrically conductive threads or the electrically conductive coated carbon fibers shows electrically conductive elements soldered to and/or crimped with and/or squashed and/or in other ways interlocked and/or firmly bonded connected to the contact tape, via which the supply of the current from the outside into the contact tape is carried out.

19. The device according to claim 18, **characterized in that** the electrical conductive elements are arranged at regular intervals or adapted to a desired contact behaviour at the contact tape.

20. The device according to one of the preceding claims, **characterized in that** the contact tape has a width of 5 to 20 cm.

21. A method for making electrical contact with electrically conductive laminates made of carbon fiber reinforced plastics (CFRP laminates), in particular a method using the device according to claim 1,
**characterized in that**
currents or voltages are guided into the at least one carbon-fiber laminate layer to be contacted by means of a fabric with at least one layer of carbon fibers, wherein the charging into the carbon-fiber laminate layer is carried out in a first region with additional electrically conductive threads, contacting the carbon fibers electrically, or an additional electrically conductive coating of the carbon fibers, and these carbon fibers extend into a second region, in which the carbon fibers are applied to at least one adjacent carbon fiber laminate layer, which has electrically to be contacted, or connected to this carbon fiber laminate layer and the surface contact of the second region with the at least one carbon-fiber laminate layer which has to be contacted transfers the voltages and currents initiated into the first region with low contact resistance to the carbon fibers of the least one carbon fiber laminate layer which has to be electrically contacted.

22. Use of a device relating to the invention according to one of the claims 1 to 20 for making contact with heating layers of electrically heatable CFRP heating molds or CFRP surface heatings.

## Revendications

1. Dispositif pour la mise en contact électrique de stratifiés électroconducteurs en plastiques renforcés de fibres de carbone (stratifiés PRFC), le dispositif comprenant au moins une couche d'un tissu présentant des fibres de carbone,
**caractérisé en ce que**
- ladite au moins une couche comprend une première zone pour la mise en contact avec des éléments électroconducteurs rapprochés du dispositif de manière externe, ainsi qu'une seconde zone dans laquelle le dispositif peut être appliqué sur les fibres de carbone d'au moins une couche stratifiée en fibres de carbone adjacente à mettre en contact électrique ou peut être relié à ces fibres de carbone,
- le contact superficiel de la seconde zone avec l'au moins une couche stratifiée en fibres de carbone à mettre en contact transmet avec une faible résistance de contact aux fibres de carbone de l'au moins une couche stratifiée en fibres de carbone à mettre en contact électrique des tensions et courants électriques introduits dans la première zone du dispositif,
- le tissu dans la première zone est formé de fibres de carbone et de fils électroconducteurs qui sont, au moins par tronçons, en contact avec les fibres de carbone et les fibres de carbone et les fils électroconducteurs sont reliés durablement les uns aux autres en formant une pluralité de croisements de fils.

2. Dispositif selon la revendication 1, **caractérisé en ce que** la couche du tissu formé de fibres de carbone comprend un agencement au moins biaxial des fibres de carbone.

3. Dispositif selon l'une des revendications 1 ou 2, **caractérisé en ce que** les fils électroconducteurs sont formés de fils métalliques.

4. Dispositif selon l'une des revendications 1 à 3, **caractérisé en ce que** les fibres de carbone et les fils électroconducteurs sont tissés les uns avec les autres et/ou cousus et/ou tricotés et/ou piqués les uns aux autres et/ou entrelacés ou reliés entre eux par une technique textile.

5. Dispositif selon l'une des revendications précédentes, **caractérisé en ce que** les fibres de carbone du dispositif forment au moins dans la première zone un agencement tissé de fils longitudinaux formés de fibres de carbone en direction de la chaîne et de fils transversaux formés de fibres de carbone en direction de la trame, les fils électroconducteurs traversant la première zone dans le sens longitudinal parallèlement à la direction de la chaîne des fils longitudinaux formés de fibres de carbone.

6. Dispositif selon l'une des revendications précédentes, **caractérisé en ce que** le nombre élevé de croisements de fils des fils électroconducteurs induit avec les fibres de carbone de la première zone une pluralité de surfaces de contact entre les fils électroconducteurs et les fibres de carbone.

7. Dispositif selon l'une des revendications précédentes, **caractérisé en ce que** les fibres de carbone et/ou les fibres électroconductrices présentent une ondulation des fibres qui réduit la rigidité du dispositif dans la première zone.

8. Dispositif selon l'une des revendications 1 ou 2, **caractérisé en ce que** le tissu dans la première zone est formé de fibres de carbone avec un revêtement électroconducteur, en particulier métallique.

9. Dispositif selon l'une des revendications précédentes, **caractérisé en ce que** les fils électroconducteurs ou les fibres de carbone formées avec un revêtement électroconducteur, en particulier métallique, peuvent être reliés électriquement aux éléments électroconducteurs rapprochés de manière externe, en particulier ils peuvent être fixés durablement sur ces éléments électroconducteurs.

10. Dispositif selon l'une des revendications précédentes, **caractérisé en ce que** les fils électroconducteurs sont formés au moins partiellement en cuivre et/ou en un alliage de cuivre et/ou en acier inoxydable et/ou en titane.

11. Dispositif selon l'une des revendications précédentes, **caractérisé en ce que** les fils électroconducteurs ou le revêtement correspondant des fibres de carbone dans la première zone du dispositif se composent d'un métal ou d'un alliage métallique qui, dans la série de tension électrique, se rapproche des caractéristiques de la fibre de carbone.

12. Dispositif selon l'une des revendications précédentes, **caractérisé en ce que** les fibres de carbone du dispositif dans la seconde zone sont stratifiées ensemble avec les fibres de carbone des couches de stratifié en fibre de carbone à mettre en contact électrique, avec mise en contact électrique multiple.

13. Dispositif selon l'une des revendications précédentes, **caractérisé en ce que** les dimensions du dispositif et/ou la répartition des fils électroconducteurs dans la première zone sont conçues de telle sorte que les fils électroconducteurs dans la première zone du dispositif doivent conduire au maximum 4 à 5 ampères par millimètre carré de section de ligne.

14. Dispositif selon l'une des revendications précédentes, **caractérisé en ce que** peut être prévu plus d'un dispositif pour la mise en contact de différentes couches stratifiées en fibre de carbone à mettre en contact électrique.

15. Dispositif selon l'une des revendications précédentes, **caractérisé en ce que** le dispositif comprend un ruban de contact longitudinal pouvant être agencé au bord ou sur des tronçons des couches stratifiées en fibre de carbone à mettre en contact électrique.

16. Dispositif selon la revendication 15, **caractérisé en ce que** le ruban de contact est réalisable sous forme de bande sans fin, de préférence sous forme de rouleaux.

17. Dispositif selon la revendication 15, **caractérisé en ce que** le ruban de contact est réalisable par tronçons en longueurs préconfectionnées.

18. Dispositif selon l'une des revendications 15 à 17, **caractérisé en ce que** le ruban de contact présente des éléments électroconducteurs reliés par soudure et/ou sertissage et/ou écrasement aux fils électroconducteurs ou aux fibres de carbone à revêtement électroconducteur et/ou reliés au ruban de contact d'une autre manière par assemblage de forme et/ou de matériaux, éléments électroconducteurs par l'intermédiaire desquels a lieu l'amenée de courant depuis l'extérieur dans le ruban de contact.

19. Dispositif selon la revendication 18, **caractérisé en ce que** les éléments électroconducteurs sont agencés sur le ruban de contact à intervalles réguliers ou de manière adaptable à un comportement de mise en contact souhaité.

20. Dispositif selon l'une des revendications précédentes, **caractérisé en ce que** le ruban de contact présente une largeur de 5 à 20 cm.

21. Procédé pour la mise en contact électrique de stratifiés électroconducteurs en plastiques renforcés de fibres de carbone (stratifiés PRFC), en particulier un procédé utilisant le dispositif selon la revendication 1,
**caractérisé en ce que** des courants ou des tensions sont introduits via au moins une couche d'un tissu présentant des fibres de carbone dans l'au moins une couche stratifiée en fibres de carbone à mettre en contact, l'introduction dans la couche stratifiée en fibres de carbone dans une première zone ayant lieu avec des fils électroconducteurs supplémentaires en contact électrique avec les fibres de carbone, ou avec un revêtement électroconducteur supplémentaire des fibres de carbone, et ces fibres de carbone s'étendant jusque dans une seconde zone, où les fibres de carbone sont appliquées sur au moins une couche stratifiée en fibres de carbone adjacente à mettre en contact électrique ou étant reliées à cette couche stratifiée en fibres de carbone, et dans lequel le contact de surface de la seconde zone avec l'au moins une couche stratifiée en fibres de carbone à mettre en contact transmet avec une faible résistance de contact aux fibres de carbone de l'au moins une couche stratifiée en fibres de carbone à mettre en contact électrique les tensions et courants électriques introduits dans la première zone.

22. Utilisation d'un dispositif selon l'invention selon l'une des revendications 1 à 20, pour la mise en contact de couches chauffantes de formes de chauffage PRFC électriquement chauffants ou de chauffages par surfaces étendues PRFC.
